# EUROPEAN PATENT APPLICATION

(11) **EP 4 726 967 A1**
(43) Date of publication of application: **15.04.2026**
(21) Application number: 25200449.4
(22) Date of filing: 05.09.2025
(51) Int. Cl.: H02J 50/10, H02J 50/60, H02J 7/02, B60L 53/124

(54) **WIRELESS CHARGING FOREIGN OBJECT DETECTION**

(30) Priority: 08.10.2024 US 202418909032
(71) Applicant: Aptiv Technologies AG, 8200 Schaffhausen (CH)
(72) Inventor: COOK, James, 8200 Schaffhausen (CH)
(74) Representative: Bardehle Pagenberg Partnerschaft mbB Patentanwälte Rechtsanwälte

(57) **Abstract**

A method (300) of foreign object detection for a wireless power transmitter (100, 600). The method (300) includes determining a vector impedance of a near-field communication (NFC) coil (102, 602) with an NFC chip (108, 608). The determined vector impedance includes an impedance amplitude component and an impedance phase component. The impedance amplitude component and the impedance phase component are compared to a baseline impedance amplitude and a baseline impedance phase. A determination as to whether an object is present within an inductive charging area of the wireless power transmitter (100, 600) is made when a difference between the determined vector impedance, and the baseline impedance amplitude and the baseline impedance phase, exceeds a delta threshold. A ping signal is generated with a charging source coil (104, 604) when the object is determined to be present. A foreign object is detected based on whether a response signal to the ping signal is received from the object.

## Description

The subject matter disclosed herein relates to charging of electronic devices and, in particular, to detection of foreign objects on a wireless charging device.

Charging via inductive coupling enables wireless power transfer to electronic devices, including for example, smart phones and tablets. Inductive charging generally includes an alternating current passed through an induction coil. The moving electric charge creates a fluctuating magnetic field, which thereby generates an alternating electric current in an induction coil in the electronic device, charging the battery of the electronic device. However, foreign objects (i.e., keys, coins, wallet, etc.) in the vicinity of the fluctuating magnetic field may absorb energy intended for the charging of the electronic devices. It would be beneficial to detect those foreign objects to prevent heating of the foreign objects and/or halt inductive charging.

According to one aspect, a method of foreign object detection for a wireless power transmitter includes determining a vector impedance of a near-field communication (NFC) coil with an NFC chip. The determined vector impedance includes an impedance amplitude component and an impedance phase component. The impedance amplitude component and the impedance phase component are compared to a baseline impedance amplitude and a baseline impedance phase. A determination as to whether an object is present within an inductive charging area of the wireless power transmitter is based on a comparison between the determined vector impedance and the baseline vector impedance. A ping signal is generated with a charging source coil when the object is determined to be present. A foreign object is detected based on whether a response signal to the ping signal is received from the object.

According to another aspect, an inductive wireless charger includes a microcontroller, a charging surface, a charging source coil, an NFC coil, and an NFC chip. The charging source coil is in communication with the microcontroller to generate a first magnetic field. The NFC coil is in communication with the microcontroller to generate a second magnetic field. The NFC chip is in communication with the NFC coil. The NFC chip is configured to determine a vector impedance of the NFC coil. The determined vector impedance includes an impedance amplitude component and an impedance phase component. The NFC chip is in communication with the microcontroller. The microcontroller is configured to compare the impedance amplitude component and the impedance phase component to a baseline impedance amplitude and a baseline impedance phase to determine whether an object is present on the charging surface.

According to another aspect, a wireless power transmitter system. The system includes a microcontroller, a charging surface, a charging source coil, an NFC coil, and an NFC chip. The charging source coil is in communication with the microcontroller and configured to generate a first magnetic field inductively transmitting power to a charge receiving coil. The near-field communication (NFC) coil is configured to generate a second magnetic field for transmitting information to a remote NFC coil. The NFC chip is in communication with the NFC coil and the microcontroller. The NFC chip determines a vector impedance of the NFC coil. The determined vector impedance includes an impedance amplitude component and an impedance phase component.
**FIG. 1** is a diagrammatic view of a wireless power transmitter, according to some embodiments.
**FIG. 2** is a diagrammatic view of an impedance vector measurement, according to some embodiments.
**FIG. 3** is a flow chart of a method for foreign object detection of a wireless power transmitter, according to some embodiments.
**FIG. 4** is a state diagram of a method for foreign object detection of a wireless power transmitter, according to some embodiments.
**FIG. 5** is a flow chart of a method for foreign object detection of a wireless power transmitter, according to some embodiments.
**FIG. 6** is a schematic diagram of a wireless power transmitter, according to some embodiments.

The present disclosure describes devices, systems, and methods for a wireless power transmitter with foreign object detection (FOD). The wireless power transmitter detects impedance changes of the charging coils via vector impedance measurements (impedance phase and impedance amplitude) from the near-field communication (NFC) controller. The wireless power transmitter system is configured to detect foreign objects that cause only an impedance phase change, foreign objects that cause only an impedance amplitude change, and foreign objects that cause both impedance phase changes and impedance amplitude changes. The wireless power transmitter system is configured to detect foreign objects regardless of when the foreign object is placed on the wireless charger. For instance, the wireless power transmitter system can detect foreign objects placed on the charging area: prior to charging, concurrently with a charging receiver, and after a charging receiver has begun charging. The wireless power transmitter system can operate in a low power object detection mode to reduce power consumption during FOD procedures and/or an idle state.

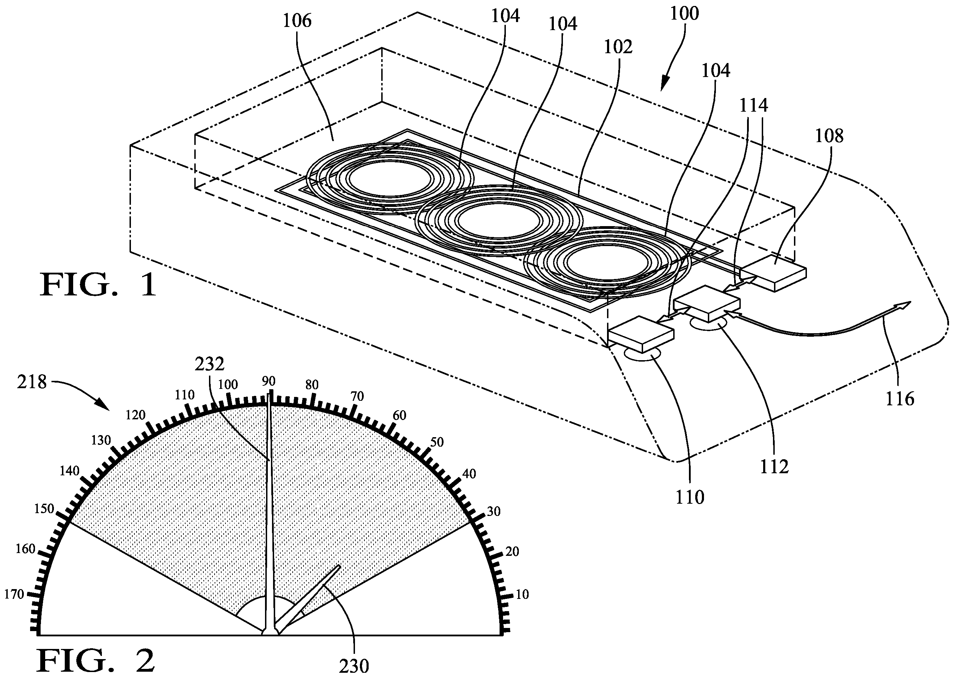

**FIG. 1** is a diagrammatic view of a wireless power transmitter 100, according to some embodiments. The wireless power transmitter 100 includes an NFC coil 102, a charging source coil 104, and an inductive charging area 106. The NFC coil 102 is in communication with an NFC controller 108, the charging source coil 104 is in communication with a coil controller 110 (e.g., a qi controller), and the NFC coil 102 and/or the charging source coil 104 are in communication with a microcontroller 112, according to some embodiments. The coil controller 110, the NFC controller 108, and/or the microcontroller 112 are in communication with each other, i.e., through a serial peripheral interface (SPI) 114. In some embodiments, one or more of the coil controller 110, the microcontroller 112, and the NFC controller 108 are in communication a power supply, a memory, and/or other controllers or systems, e.g., via LIN and/or CAN communication protocols 116. In some embodiments, the charging source coil 104 is a qi-enabled charging coil.

In some embodiments, the NFC controller 108 measures an impedance of the NFC coil 102. The NFC controller 108 and the NFC coil 102 are configured to sense and/or measure an impedance phase and an impedance amplitude. For instance, the NFC controller 108 and/or the NFC coil 102 are automatic antenna tuning (AAT) enabled, which thereby allows impedance amplitude and impedance phase measurement of the parallel path of the antenna (e.g., the NFC coil 102), according to some embodiments. The AAT functionality of the NFC controller 108 and/or the NFC coil 102 can be selectively enabled/disabled, as in some embodiments, the AAT functionality changes the baseline impedance of the NFC coil 102. In some embodiments, the NFC controller 108 includes a ST25R3914/5 integrated NFC initiator for automotive applications.

**FIG. 2** is a diagrammatic view of an impedance vector measurement 218, according to some embodiments. The impedance vector measurement 218 includes an impedance phase component 230 and an impedance amplitude component 232, according to some embodiments. The impedance phase component 230 includes a difference in phase between an output voltage and output current (i.e., a phase angle representative of complex load impedance), according to some embodiments. In some embodiments, the NFC controller 108 and/or the microcontroller 112 measure the output voltage and output current of the high-frequency output of the NFC coil 102 to determine the impedance phase component 230. In some embodiments, the NFC controller uses an I/Q mixer to measure the amplitude and phase of the NFC coil. The impedance amplitude component 232 includes an inductive resistance and inductive reactance component, e.g., the sum of inductive resistance and inductive reactance, according to some embodiments. The wireless power transmitter 100 is configured to perform the impedance vector measurement 218, according to some embodiments.

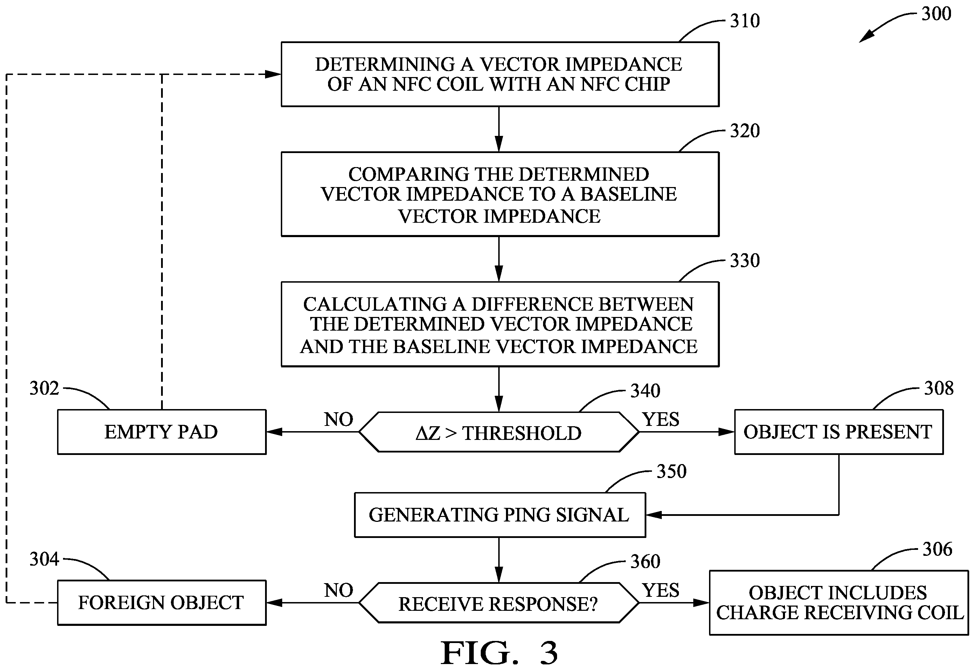

**FIG. 3** is a flow chart of a method 300 for foreign object detection of a wireless power transmitter, according to some embodiments. The wireless power transmitter may include any and/or all features of the wireless power transmitter 100 described above. The method 300 can be performed by a microcontroller and/or an NFC controller (e.g., the microcontroller 112 and/or the NFC controller 108) to determine the state of the inductive charging area (or charging pad). For instance, the method 300 can determine an empty pad state 302, a foreign object (FO) suspected state 304, and/or a charging receiver coil state 306, according to some embodiments.

At step 310, the method 300 includes determining a vector impedance Z of an NFC coil with an NFC chip. The NFC coil and NFC chip may include any and/or all features of the NFC coil 102 and the NFC controller 108 described above. The determined vector impedance includes an impedance amplitude component *Z_{A}* (e.g., the impedance amplitude component 232) and an impedance phase component *Z_{P}* (e.g., the impedance phase component 230).

At step 320, the method 300 includes comparing the determined vector impedance Z to a baseline vector impedance *Z_{baseline}.* In some embodiments, the step 320 includes comparing the impedance amplitude component *Z_{A}* to a baseline impedance amplitude *Z_{Abaseline}* and/or comparing the impedance phase component *Z_{P}* to a baseline impedance phase component *Z_{Pbaseline}.* Stated generally, the vector impedance Z is compared to a baseline impedance *Z_{baseline}.* In some embodiments, the baseline vector impedance *Z_{baseline}* is a preprogrammed or a previously measured value of impedance phase and impedance amplitude with no object present on the inductive charging area.

At step 330, the method 300 includes calculating a difference between the determined vector impedance *Z* and the baseline vector impedance *Z_{baseline}.* In some embodiments, the difference between the determined vector impedance *Z* and the baseline vector impedance *Z_{baseline}* is based on subtraction or a difference between the two values, |*Z - Z_{baseline}* | (also referred to as *ΔZ* and/or as a difference). The vector impedance *Z* includes the impedance amplitude component *Z_{A}* and the impedance phase component *Z_{P}*. The comparison may include an amplitude difference *ΔZ_{A}* between the measured impedance amplitude component *Z_{A}* and the baseline impedance amplitude *Z_{Abaseline}* and/or a phase difference *ΔZ_{P}* between the measured impedance phase component *Z_{P}* and baseline impedance phase component *Z_{Pbaseline},* according to some embodiments.

At step 340, the method 300 includes determining whether an object is present based on the comparison between the determined vector impedance *Z* and the baseline vector impedance *Z_{baseline}.* In some embodiments, at the step 340, the method 300 includes comparing the difference *ΔZ* (including *ΔZ_{P}* and/or *ΔZ_{A}*) to a threshold (or delta threshold). If, for example, the difference *ΔZ* exceeds a threshold, e.g., the *ΔZ_{P}* > phase threshold and/or *ΔZ_{A}* > amplitude threshold, the method 300 determines an object is present state 308 of the wireless power transmitter. In other words, if either the measured impedance amplitude *Z_{A}* or the measured impedance phase *Z_{P}* differ from a baseline level of impedance amplitude *Z_{Abaseline}* or impedance phase *Z_{Pbaseline},* the method determines an object is present on the inductive charging area of the wireless power transmitter. In contrast, if the difference *ΔZ* is less than a threshold, e.g., the *ΔZ_{P}* < phase threshold and/or *ΔZ_{A}* < amplitude threshold, the method 300 determines an empty pad state 302 of the wireless power transmitter.

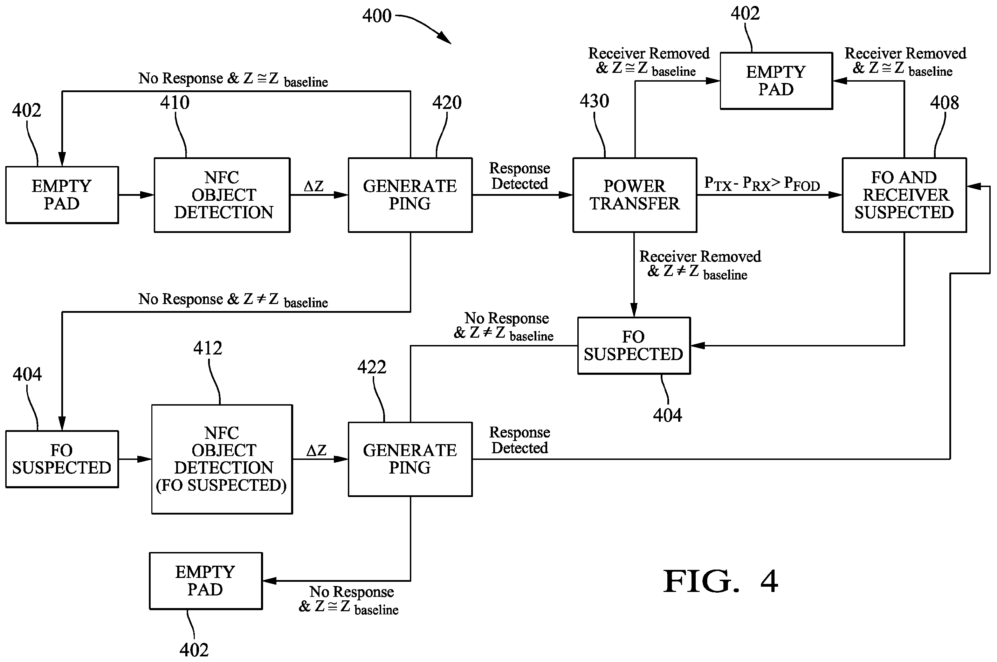

At step 350, the method 300 includes generating a ping signal with a charging source coil when in the state 308. In some embodiments, the ping signal includes a qi ping signal configured to communicated with a qi charge receiving coil. At step 360, the method 300 includes detecting a foreign object based on whether a response signal to the ping signal is received from the object. If, for instance, a response signal is received from a charge receiving coil, the wireless power transmitter is in a charge receiving coil detected state 306. In contrast, if no response signal is received, the object detected is assumed not to include a charge receiving coil, and thus, the wireless power transmitter is in a foreign object detected/suspected 304, according to some embodiments. In some embodiments, in the state 302 and 304, the method 300 restarts at step 310. As described in more detail in **FIG. 4****,** additional steps may be utilized to determine whether a foreign object is concurrently present with a charge receiving coil.

**FIG. 4** is a state diagram of a method 400 for foreign object detection of a wireless power transmitter, according to some embodiments. The wireless power transmitter may include any and/or all features of the wireless power transmitter 100 described above. The method 400 can be performed by a microcontroller and/or an NFC controller (e.g., the microcontroller 112 and/or the NFC controller 108) to determine the state of the inductive charging area (or charging pad). For instance, the method 400 can determine an empty pad state 402 and a foreign object (FO) suspected state 404, according to some embodiments. In some embodiments, the method 400 can include any and/or all features of the method 300 and/or operate in combination with the method 300 described above.

At NFC object detection state 410, the method 400 includes detecting an object with an NFC coil and/or an NFC chip. The NFC coil and NFC chip may include any and/or all features of the NFC coil 102 and the NFC controller 108 described above. In some embodiments, the state 410 includes determining a vector impedance *Z* of the NFC coil 102. The determined vector impedance includes an impedance amplitude component *Z_{A}* (e.g., the impedance amplitude component 232) and an impedance phase component *Z_{P}* (e.g., the impedance phase component 230). In some embodiments, the state 410 includes comparing the impedance amplitude component *Z_{A}* to a baseline impedance amplitude *Z_{Abaseline}* and/or comparing the impedance phase component *Z_{P}* to a baseline impedance phase component *Z_{Pbaseline}.* Stated generally, the vector impedance *Z* is compared to a baseline impedance *Z_{baseline}.*

In some embodiments, if *Z ≅ Z_{baseline}* (i.e., *Z_{A}* ≅ *Z_{Abaseline}* and *Z_{P}* ≅ *Z_{Pbaseline}*), the method 400 determines the wireless power transmitter is in the empty pad state 402. In other words, if the measured vector impedance is substantially equal to a baseline vector impedance (e.g., within 10% of the baseline vector impedance), a determination is made that no object is present on the inductive charging area. If, for example, an object was present on the inductive charging area, the measured vector impedance *Z* of the NFC coil, including impedance amplitude *Z_{A}* and/or impedance phase *Z_{P}*, would differ from the baseline vector impedance *Z_{baseline}.* The baseline vector impedance *Z_{baseline}* can be a predetermined, or preprogrammed value, and/or some embodiments, can be calibrated when there are no objects present on the inductive charging area.

If an amplitude difference *ΔZ_{A}* between the measured impedance amplitude component *Z_{A}* and the baseline impedance amplitude *Z_{Abaseline}* and/or a phase difference *ΔZ_{P}* between the measured impedance phase component *Z_{P}* and baseline impedance phase component *Z_{Pbaseline}* exceed a delta threshold, the method 400 determines that an object is present on the inductive charging area. The amplitude difference *ΔZ_{A}* and the phase difference *ΔZ_{P}* may collectively be referred as an impedance difference *ΔZ*.

At generate ping state 420, the method 400 includes generating a ping signal with a charging source coil when an object is determined to be present. In some embodiments, the ping signal is generated by the charging source coil 104 of the wireless power transmitter 100. The ping signal is a qi ping, i.e., the qi wireless charging standard periodic test pulse signal to detect and/or communicate with a qi receiver (if present), according to some embodiments.

In some embodiments, at the state 420, the method includes determining whether a response signal to the ping signal is generated. A response to the ping signal indicates that an electronic device including a charge receiving coil is located on the charging surface. The method can determine, based on whether a response signal is detected, whether the object on the inductive charging surface is an electronic device with a charge receiving coil, or alternatively, whether the object on the inductive charging surface does not include a charge receiving coil (i.e., a foreign object such as a coin, key, RFID device, wallet, etc.).

In some embodiments, if no response signal to the ping signal is detected at the state 420, the method 400 includes measuring the vector impedance *Z* of the NFC coil 102 and comparing the measured vector impedance *Z* to the baseline vector impedance *Z_{baseline}.* If *Z ≅ Z_{baseline}* (i.e., *Z_{A}* ≅ *Z_{Abaseline}* and *Z_{P}* ≅ *Z_{Pbaseline}*), a determination is made that no object is present on the inductive charging area, and the wireless power transmitter 100 is in the empty pad state 402. For instance, whatever object that was placed on the inductive charging area that initially triggered the method 400 to generate the ping signal may have been removed. Alternatively, the NFC controller and/or NFC chip could have mistakenly measured an impedance difference *ΔZ* exceeding the delta threshold. If, however, *Z > Z_{baseline}* (i.e., *Z_{A} > Z_{Abaseline}* and/or *Z_{P} > Z_{Pbaseline}*), a determination is made that an object is present on the inductive charging area, and the object does not include a charge receiving coil. The wireless power transmitter 100 is therefore determined to be in the FO suspected state 404.

In some embodiments, if a response signal to the ping signal is detected at the state 420, the method proceeds to power transfer state 430, transferring power to a charge receiving coil. In some embodiments, the state 430 includes energizing the charging source coil 104 to generate a first magnetic field inductively transmitting power to the charge receiving coil of the object. In some embodiments, the charging source coil 104 is a qi charging coil configured to deliver and communicate via the qi wireless charging standards/protocol. In some embodiments, the state 430 includes energizing the NFC coil 102 to generate a second magnetic field inductively transmitting power to the charge receiving coil of the object.

In some embodiments, the state 430 includes sensing a transmitted power P_{TX} output by the charging source coil 104 and sensing a received power P_{RX} received by the charge receiving coil of the object. A differential between transmitted power P_{TX} and power received P_{RX} is calculated, according to some embodiments. The calculated differential is compared to a power loss threshold P_{FOD}. If the calculated differential is greater than the power loss threshold P_{FOD}, i.e., P_{TX} - P_{RX} > P_{FOD}, a determination is made that a foreign object is present at the inductive charging area, according to some embodiments. For example, if a foreign object (e.g., a coin, key, wallet, etc.) is placed on the inductive charging area either concurrently with the charge receiving coil or after charging of a wireless device has begun, the calculated differential (P_{TX} - P_{RX}) will increase. The increase in the calculated differential (P_{TX} - P_{RX}) is indicative of a foreign object present on the inductive charging area with the charge receiving coil, as a portion of the transmitted power P_{TX} output by the charging source coil 104 is received by the foreign object (and potentially converted to thermal energy) instead of being received by the charge receiving coil.

In some embodiments, if the calculated differential is greater than the power loss threshold P_{FOD} (P_{TX} - P_{RX} > P_{FOD}), the method 400 determines the wireless power transmitter 100 is in a FO with receiver suspected state 408, i.e., a foreign object and a charge receiving coil are suspected to be present on inductive charging area. In the FO with receiver suspected state 408, the method 400 may include one or more of the steps of pausing generation of the first magnetic field, notifying a user of a suspected foreign object, and measuring a recharacterized vector impedance of the NFC coil with the NFC chip. As used hereinafter, the term "recharacterized" refers to an updated (or real-time) measurement, i.e., the recharacterized vector impedance of the NFC coil is an updated measurement of vector impedance at anytime after the first vector impedance measurement, according to some embodiments.

In some embodiments, measuring the recharacterized vector impedance of the NFC coil with the NFC chip includes any and/or all elements of the state 410. The recharacterized vector impedance *Z_{R}* includes a recharacterized impedance amplitude component *Z_{RA}* (e.g., the impedance amplitude component 232) and a recharacterized impedance phase component *Z_{RP}* (e.g., the impedance phase component 230). In some embodiments the recharacterized impedance amplitude component *Z_{RA}* is compared to a baseline impedance amplitude *Z_{RAbaseline}* and/or the recharacterized impedance phase component *Z_{RP}* is compared to a baseline impedance phase component *Z_{RPbaseline}.* In other words, the method 400 includes detecting a change in impedance *ΔZ* (including *ΔZ_{A}* and *ΔZ_{P}*) exceeding a delta threshold to determine if any object is removed (or added) to the inductive charging area.

In some embodiments, at the state 330 and/or at the FO with receiver suspected state 408, the method 400 can include detecting removal of the charge receiving coil based on one or more of the calculated differential being greater than the power loss threshold P_{FOD} (P_{TX} - P_{RX} > P_{FOD}), the received power P_{RX} falling below a received power threshold, the change in impedance *ΔZ,* and/or other qi communication between the charging source coil 104 and the charge receiving coil. If the receiver (i.e., the charge receiving coil) is removed, the method 400 includes determining whether the wireless power transmitter 100 is in the empty pad state 402 or the FO suspected state 404 based on the comparison of the measured vector impedance *Z* of the NFC coil 102 and the baseline vector impedance *Z_{baseline}* of the NFC coil 102.

In some embodiments, when the wireless power transmitter 100 is in the FO suspected state 404, the method includes NFC object detection state 412. The state 412 may include any and/or all elements of the state 410. For instance, the state 412 may include measuring a recharacterized vector impedance *Z_{R}* of the NFC coil 102 with the NFC controller 108. The recharacterized vector impedance *Z_{R}* includes a recharacterized impedance amplitude component *Z_{RA}* (e.g., the impedance amplitude component 232) and a recharacterized impedance phase component *Z_{RP}* (e.g., the impedance phase component 230). In some embodiments the recharacterized impedance amplitude component *Z_{RA}* is compared to a baseline impedance amplitude *Z_{RAbaseline}* and/or the recharacterized impedance phase component *Z_{RP}* is compared to a baseline impedance phase component *Z_{RPbaseline}.* In other words, the step 412 includes detecting a change in impedance *ΔZ* (including *ΔZ_{A}* and *ΔZ_{P}*) exceeding a delta threshold to determine if any object is removed (or added) to the inductive charging area.

In some embodiments, if a change in impedance *ΔZ* (including *ΔZ_{A}* and *ΔZ_{P}*) exceeding a delta threshold is detected, the method 400 proceeds to generate ping state 422. At the state 422, a ping signal (or secondary ping signal) is generated by the charging source coil 104. The state 422 may include any and/or all elements of the step 420. In some embodiments, the state 422 includes determining whether the object includes a charge receiving coil based on whether the object provides a secondary response signal to the secondary ping signal. If a secondary response signal is detected, the wireless power transmitter 100 is in the FO with receiver suspected state 408. If no secondary response signal is detected, the wireless power transmitter 100 is in the FO suspected state 404. If no secondary response signal is detected and the recharacterized vector impedance *Z_{R}* is substantially equal to the baseline vector impedance *Z_{Rbaseline}* (*Z_{R} ≅ Z_{Rbaseline}*), the wireless power transmitter 100 is in the empty pad state 402, according to some embodiments.

The method 400 provides foreign object detection at all stages of the inductive charging process. For example, foreign objects placed on the inductive charging area before a receiver or charge receiving coil are detected at the state 410. Foreign objects placed on the inductive charging area concurrently with the receiver are detected at the state 410 and the state 430. Foreign objects placed on the inductive charging area after the receiver and/or after charging has begun are detected at the state 430.

The foreign object detection described in the method 400 is highly sensitive and can detect small and/or ferrous objects. For instance, at the state 410, the method 400 measures an impedance phase and an impedance amplitude of the NFC coil 102 with the NFC controller 108. The measurement of both impedance phase and impedance amplitude improves sensitivity of the FOD system, as in some cases, small or ferrous objects may only affect impedance phase. Thus, FOD systems/methods that do not measure impedance phase cannot detect such small or ferrous objects.

In some embodiments, when the wireless power transmitter 100 is in the empty pad state 402 and/or the FO suspected state 404, the microcontroller 112 and/or the NFC controller 108 initiate a low power detection mode and/or sleep mode. For example, in the empty pad state 402, the NFC controller 108 is in a low power detection mode configured to monitor a change in vector impedance. If the NFC controller detects a change in vector impedance 108, the NFC controller 108 can wake the microcontroller 112 from a sleep mode to perform any of the steps/elements of the method 400. Likewise, in the FO suspected state 404 and the FO with receiver suspected state 408, the NFC controller 108 is in a low power detection mode configured to monitor a change in vector impedance. The low power detection mode/sleep mode improve efficiency of the wireless power transmitter 100 and conserves energy.

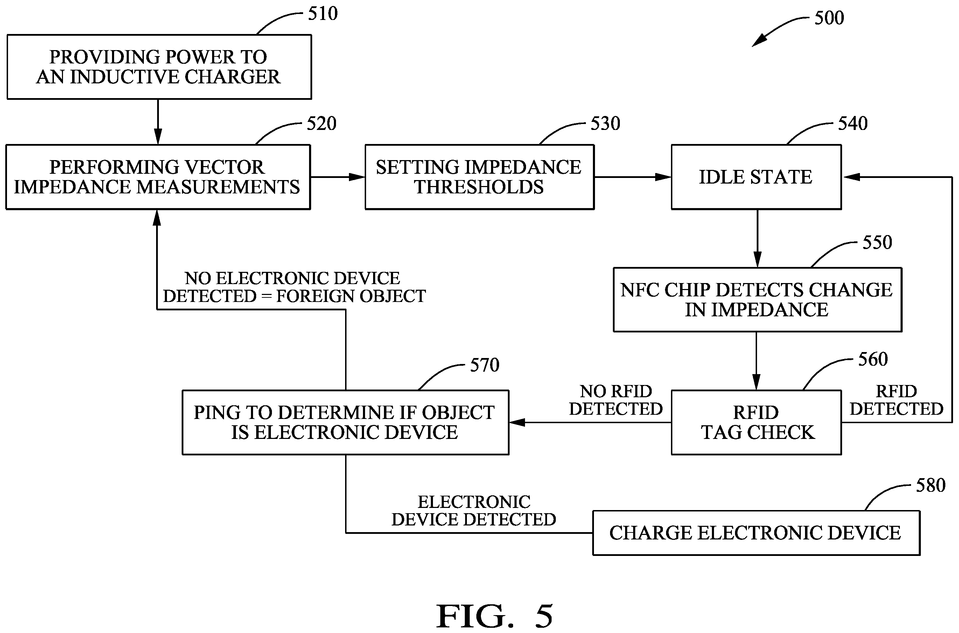

**FIG. 5** is a flow chart of a method for foreign object detection of a wireless power transmitter, according to some embodiments. At step 510, the method 500 includes providing power to an inductive charger. The inductive charger may include any and/or all features of the wireless power transmitter 100 described above. At step 520, the method 500 includes measuring vector impedance of the NFC coil 102 with the NFC controller 108. The vector impedance includes an impedance amplitude component *Z_{A}* (e.g., the impedance amplitude component 232) and an impedance phase component *Z_{P}* (e.g., the impedance phase component 230).

At step 530, the method 500 includes setting impedance thresholds. In some embodiments, the one or more impedance thresholds are preset thresholds stored in a memory of the microcontroller 112. In some embodiments, the one or more impedance thresholds are dynamic thresholds. The one or more impedance thresholds may include a delta threshold *ΔZ* indicative of a change in impedance from a baseline vector impedance *Z_{baseline}.* The baseline vector impedance *Z_{baseline}* can be measured or calibrated when there is no object present on the inductive charging area 106-and therefore, a measured vector impedance that exceeds the delta threshold *ΔZ* may be indicative of an object positioned on the inductive charging area 106.

At step 540, the method 500 includes initiating an idle state for the wireless power transmitter 100, according to some embodiments. The idle state includes initiating a low power detection mode for the NFC controller 108 and/or initiating a sleep state for the microcontroller 112, according to some embodiments. The idle state improves energy efficiency of the wireless power transmitter 100 by reducing operation power during the object detection phase.

At step 550, the method 500 includes detecting a change in vector impedance with the NFC chip (or the NFC controller 108). The detected change in the vector impedance, e.g., the change in impedance amplitude *ΔZ_{A}* and/or the change in impedance phase *ΔZ_{P}*, is compared to the one or more impedance thresholds set in the step 530. If, for example, the detected change in the vector impedance exceeds the one or more impedance thresholds, the NFC controller 108 wakes the microcontroller 112, and the wireless power transmitter 100 initiates a non-idle state. In some embodiments, the step 550 may include any and/or all elements of the step 410 and/or the step 412 described above.

At step 560, the method includes detecting whether an RFID is present on the inductive charging area 106. The NFC controller 108 attempts to communicate with object to determine whether the object is an RFID, according to some embodiments. If the NFC controller 108 detects an RFID, the wireless power transmitter 100 will return to the idle state and wait for the RFID device to be removed.

At step 570, the method 500 includes generating a ping signal to determine whether the object includes a charge receiving coil. The step 570 may include any and/or all of the elements of the step 420 and/or the step 422, according to some embodiments. If, for example, no response signal is received by the wireless power transmitter 100, the object is assumed to be a foreign object (e.g., coins, keys, a wallet, etc.). The method 500 returns to the step 520, and in some embodiments, recalibrates or recharacterizes the impedance thresholds in the step 520 and/or the step 530.

At step 580, the method 500 includes charging the charge receiving coil. In some embodiments, the step 450 includes any and/or all elements of the step 430 described above. The method 500 may include additional steps/elements to monitor foreign objects after charging of the charge receiving coil has begun, including for example, the steps/elements described above in **FIG**. **4****.** In some embodiments, the method 500 includes any and/or all features of the methods 300, 400 described above.

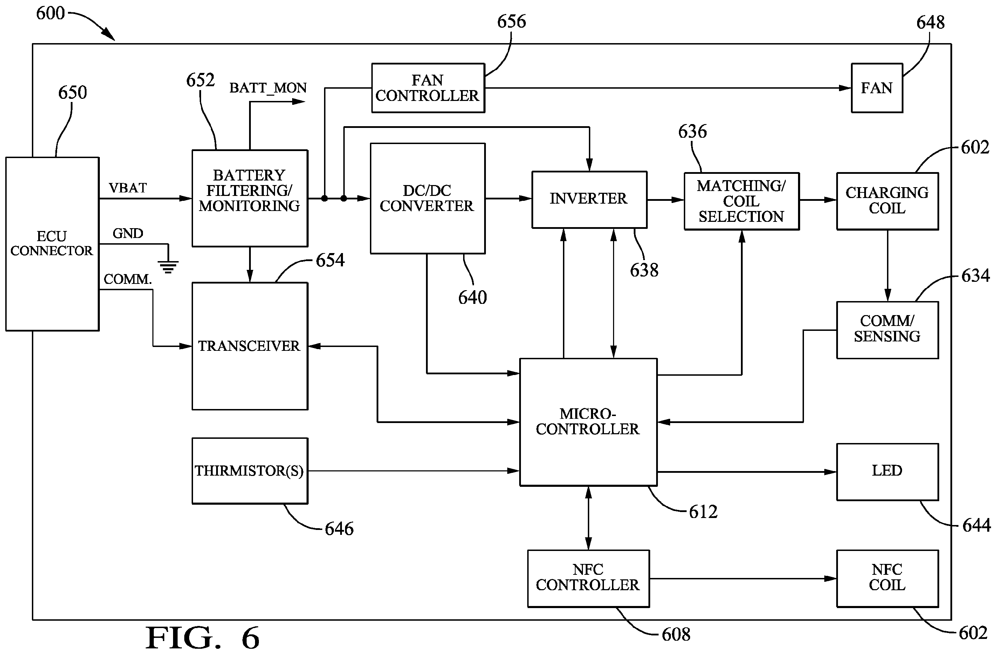

**FIG. 6** is a schematic diagram of a wireless power transmitter 600, according to some embodiments. In some embodiments, the wireless power transmitter 600 may include any and/or all elements of the wireless power transmitter 100. The wireless power transmitter 600 includes a microcontroller 612. In some embodiments, an NFC coil 602 and NFC controller 608 are in communication with the microcontroller 612, for instance, via serial peripheral interface (SPI) communication. In some embodiments, the wireless power transmitter 600 includes a charging coil 602 and a sensing controller 634 in communication with the microcontroller 612. In some embodiments, the wireless power transmitter 600 includes an inverter 638, a coil selection controller 636, a DC/DC converter 640, a battery monitor 652, a fan controller 656, a fan 648, an ECU connector 650, a transceiver 654, one or more thermistors 646, and an LED 644 in communication with the microcontroller 612. In some embodiments, the wireless power transmitter 600 includes a magnetic alignment feature.

While the invention has been described with reference to an exemplary embodiment(s), it will be understood by those skilled in the art that various changes may be made and equivalents may be substituted for elements thereof without departing from the scope of the invention. In addition, many modifications may be made to adapt a particular situation or material to the teachings of the invention without departing from the essential scope thereof. Therefore, it is intended that the invention is not limited to the particular embodiment(s) disclosed, but that the invention will include all embodiments falling within the scope of the appended claims.

### Discussion of Possible Embodiments

The following are non-exclusive descriptions of possible embodiments of the present invention.

According to one aspect, a method of foreign object detection for a wireless power transmitter, the method including: determining a vector impedance of a near-field communication (NFC) coil with an NFC chip, the determined vector impedance including an impedance amplitude component and an impedance phase component; comparing the impedance amplitude component and the impedance phase component to a baseline impedance amplitude and a baseline impedance phase; determining an object is present within an inductive charging area of the wireless power transmitter when a difference between the determined vector impedance, and the baseline impedance amplitude and the baseline impedance phase, exceeds a delta threshold; generating a ping signal with a charging source coil when the object is determined to be present; and detecting a foreign object based on whether a response signal to the ping signal is received from the object.

In some aspects, the techniques described herein relate to a method, further including energizing the charging source coil to generate a first magnetic field inductively transmitting power to a charge receiving coil of the object when the object provides the response signal to the ping signal.

In some aspects, the techniques described herein relate to a method, further including: sensing a transmitted power (PTX) output by the charging source coil; sensing a received power (PRX) received by the charge receiving coil; calculating a differential between transmitted power and power received; and comparing the differential to a power loss threshold, wherein the detecting of the foreign object is further based on whether the differential exceeds the power loss threshold.

In some aspects, the techniques described herein relate to a method, further including pausing generation of the first magnetic field when the foreign object is detected; and measuring a recharacterized vector impedance of the NFC coil with the NFC chip.

In some aspects, the techniques described herein relate to a method, further including: sensing a transmitted power (PTX) output by the charging source coil; sensing a received power (PRX) received by the charge receiving coil; detecting removal of the charge receiving coil when the sensed received power (PRX) is less than a received power threshold; measuring a recharacterized vector impedance of the NFC coil with the NFC chip; and comparing the recharacterized vector impedance to the baseline impedance amplitude and the baseline impedance phase to determine whether the foreign object is present.

In some aspects, the techniques described herein relate to a method, wherein if no response signal to the ping signal is received, the foreign objected is detected.

In some aspects, the techniques described herein relate to a method, further including: measuring a recharacterized vector impedance of the NFC coil with the NFC chip; detecting an impedance change in the recharacterized vector impedance; generating a secondary ping signal with the charging source coil in response to the impedance change; and determining whether the object includes a charge receiving coil based on whether the object provides a secondary response signal to the secondary ping signal.

In some aspects, the techniques described herein relate to a method, further including initiating a low power detection mode of the NFC chip and a sleep mode of a microcontroller when the difference is less than the threshold.

In some aspects, the techniques described herein relate to a method, further including measuring a recharacterized vector impedance of the NFC coil with the NFC chip; and waking the microcontroller when a second difference between the recharacterization vector impedance and the baseline vector impedance is greater than the threshold.

In some aspects, the techniques described herein relate to a method, further including determining the inductive charging area of the wireless power transmitter is empty when the difference between the determined vector impedance, and the baseline impedance amplitude and the baseline impedance phase, is less than the delta threshold.

In some aspects, the techniques described herein relate to an inductive wireless charger, including: a microcontroller; a charging surface; a charging source coil in communication with the microcontroller to generate a first magnetic field; a near-field communication (NFC) coil to generate a second magnetic field; and a near-field communication (NFC) chip in communication with the NFC coil, the NFC chip configured to determine a vector impedance of the NFC coil, the determined vector impedance including an impedance amplitude component and an impedance phase component, the NFC chip in communication with the microcontroller, the microcontroller configured to compare the impedance amplitude component and the impedance phase component to a baseline impedance amplitude and a baseline impedance phase to determine whether an object is present on the charging surface.

In some aspects, the techniques described herein relate to an inductive wireless charger, wherein the NFC chip initiates a low power detection mode, and the microcontroller initiates a sleep mode when a first difference between the impedance amplitude component and the impedance phase component and the baseline impedance amplitude and the baseline impedance phase is less than a threshold.

In some aspects, the techniques described herein relate to an inductive wireless charger, wherein the NFC chip is configured to determine a recharacterization vector impedance of the NFC coil, the recharacterization vector impedance including a recharacterized impedance amplitude component and a recharacterized impedance phase component, and wherein the microcontroller initiates a non-sleep mode when a second difference between the recharacterized impedance amplitude component and the recharacterized impedance phase component and the baseline impedance amplitude and the baseline impedance phase is greater than the threshold.

In some aspects, the techniques described herein relate to an inductive wireless charger, wherein the charging source coil generates a ping signal when the microcontroller identifies a difference between the impedance amplitude component and the impedance phase component, and the baseline impedance amplitude and the baseline impedance phase is greater than a threshold.

In some aspects, the techniques described herein relate to an inductive wireless charger, wherein the microcontroller receives a response signal to the ping signal and provides power to the charging source coil to output a transmit power (PTX) to a charge receiving coil.

In some aspects, the techniques described herein relate to an inductive wireless charger, wherein the microcontroller is configured to: measure the transmit power (PTX) output by the charging source coil; measure a received power (PRX) received by the charge receiving coil; calculate a differential between the transmitted power and the power received; compare the differential to a power loss threshold; and detect a foreign object if the differential exceeds the power loss threshold.

In some aspects, the techniques described herein relate to a wireless power transmitter system, including: a microcontroller; a charging surface; a charging source coil in communication with the microcontroller and configured to generate a first magnetic field inductively transmitting power to a charge receiving coil; a near-field communication (NFC) coil configured to generate a second magnetic field for transmitting information to a remote NFC coil; and an NFC chip in communication with the NFC coil and the microcontroller, the NFC chip configured to determine a vector impedance of the NFC coil, the determined vector impedance including an impedance amplitude component and an impedance phase component.

In some aspects, the techniques described herein relate to a wireless power transmitter system, wherein the NFC chip calculates a baseline vector impedance of the NFC coil, the baseline vector impedance including a baseline impedance amplitude and a baseline impedance phase.

In some aspects, the techniques described herein relate to a wireless power transmitter system, wherein the NFC chip compares the baseline vector impedance to the determined vector impedance to determine whether an object is present on the charging surface.

In some aspects, the techniques described herein relate to a wireless power transmitter system, wherein the charging source coil generates a ping signal when the object is determined to be present, wherein the microcontroller receives a ping response from the charge receiving coil in response to the ping signal when a qi-enabled electronic device is on the charging surface.

## Claims

1. A method (300) of foreign object detection for a wireless power transmitter (100, 600), the method (300) comprising:
determining a vector impedance of a near-field communication (NFC) coil (102, 602) with an NFC chip (108, 608), the determined vector impedance including an impedance amplitude component (232) and an impedance phase component (230);
comparing the impedance amplitude component (232) and the impedance phase component (230) to a baseline impedance amplitude and a baseline impedance phase;
determining an object is present within an inductive charging area (106) of the wireless power transmitter (100, 600) based on a difference between the impedance amplitude component (232) and the baseline impedance amplitude, and between the impedance phase component (230) and the baseline impedance phase;
generating a ping signal with a charging source coil (104) when the object is determined to be present; and
detecting a foreign object based on whether a response signal to the ping signal is received from the object.

2. The method (300) of claim 1, further comprising:
energizing the charging source coil (104) to generate a first magnetic field inductively transmitting power to a charge receiving coil of the object when the object provides the response signal to the ping signal.

3. The method (300) of claim 2, further comprising:
sensing a transmitted power (P_{TX}) output by the charging source coil (104);
sensing a received power (P_{RX}) received by the charge receiving coil;
calculating a differential between transmitted power and power received; and
comparing the differential to a power loss threshold,
wherein the detecting of the foreign object is further based on whether the differential exceeds the power loss threshold;
pausing generation of the first magnetic field when the foreign object is detected; and
measuring a recharacterized vector impedance of the NFC coil (102, 602) with the NFC chip.

4. The method (300) of claim 2 or 3, further comprising:
sensing a transmitted power (P_{TX}) output by the charging source coil (104);
sensing a received power (P_{RX}) received by the charge receiving coil;
detecting removal of the charge receiving coil;
measuring a recharacterized vector impedance of the NFC coil (102, 602) with the NFC chip; and
comparing the recharacterized vector impedance to the baseline impedance amplitude and the baseline impedance phase to determine whether the foreign object is present.

5. The method (300) of any one of the preceding claims, wherein the foreign objected is detected if no response signal to the ping signal is received, the method (300) further comprising:
measuring a recharacterized vector impedance of the NFC coil (102, 602) with the NFC chip (108, 608);
detecting an impedance change in the recharacterized vector impedance;
generating a secondary ping signal with the charging source coil (104) in response to the impedance change; and
determining whether the object includes a charge receiving coil based on whether the object provides a secondary response signal to the secondary ping signal.

6. The method (300) of any one of the preceding claims, further comprising:
initiating a low power detection mode of the NFC chip (108, 608) and a sleep mode of a microcontroller (112, 612) when the difference is less than a threshold;
measuring a recharacterized vector impedance of the NFC coil (102, 602) with the NFC chip (108, 608); and
waking the microcontroller (112, 612) when a second difference between the recharacterization vector impedance and the baseline vector impedance is greater than the threshold.

7. The method (300) of any one of the preceding claims, further comprising: determining the inductive charging area (106) of the wireless power transmitter (100, 600) is empty when the difference between the determined vector impedance, and the baseline impedance amplitude and the baseline impedance phase, is less than a delta threshold.

8. An inductive wireless charger, comprising:
a microcontroller (112, 612);
a charging surface;
a charging source coil (104) in communication with the microcontroller (112, 612) to generate a first magnetic field;
a near-field communication (NFC) coil to generate a second magnetic field; and
a near-field communication (NFC) chip (108, 608) in communication with the NFC coil (102, 602), the NFC chip (108, 608) configured to determine a vector impedance of the NFC coil (102, 602), the determined vector impedance including an impedance amplitude component (232) and an impedance phase component (230), the NFC chip (108, 608) in communication with the microcontroller (112, 612), the microcontroller (112, 612) configured to compare the impedance amplitude component (232) and the impedance phase component (230) to a baseline impedance amplitude and a baseline impedance phase to determine whether an object is present on the charging surface.

9. The inductive wireless charger of claim 8, wherein the NFC chip (108, 608) initiates a low power detection mode and the microcontroller (112, 612) initiates a sleep mode when a first difference between the impedance amplitude component (232) and the impedance phase component (230) and the baseline impedance amplitude and the baseline impedance phase is less than a threshold.

10. The inductive wireless charger of claim 9, wherein the NFC chip (108, 608) is configured to determine a recharacterization vector impedance of the NFC coil (102, 602), the recharacterization vector impedance including a recharacterized impedance amplitude component (232) and a recharacterized impedance phase component (230), and wherein the microcontroller (112, 612) initiates a non-sleep mode when a second difference between the recharacterized impedance amplitude component (232) and the recharacterized impedance phase component (230) and the baseline impedance amplitude and the baseline impedance phase is greater than the threshold.

11. The inductive wireless charger of any one of claims 8 to 10, wherein the charging source coil (104) generates a ping signal when the microcontroller (112, 612) identifies a difference between the impedance amplitude component (232) and the impedance phase component (230) and the baseline impedance amplitude and the baseline impedance phase is greater than a threshold, wherein the microcontroller (112, 612) receives a response signal to the ping signal and provides power to the charging source coil (104) to output a transmit power (PTX) to a charge receiving coil, and wherein the microcontroller (112, 612) is configured to:
measure the transmit power (P_{TX}) output by the charging source coil (104);
measure a received power (P_{RX}) received by the charge receiving coil;
calculate a differential between the transmitted power and the power received;
compare the differential to a power loss threshold; and
detect a foreign object if the differential exceeds the power loss threshold.

12. A wireless power transmitter (100, 600) system, comprising:
a microcontroller (112, 612);
a charging surface;
a charging source coil (104) in communication with the microcontroller (112, 612) and configured to generate a first magnetic field inductively transmitting power to a charge receiving coil;
a near-field communication (NFC) coil configured to generate a second magnetic field for transmitting information to a remote NFC coil (102, 602); and
an NFC chip (108, 608) in communication with the NFC coil (102, 602) and the microcontroller (112, 612), the NFC chip (108, 608) configured to determine a vector impedance of the NFC coil (102, 602), the determined vector impedance including an impedance amplitude component (232) and an impedance phase component (230).

13. The wireless power transmitter (100, 600) system of claim 12, wherein the NFC chip (108, 608) calculates a baseline vector impedance of the NFC coil (102, 602), the baseline vector impedance including a baseline impedance amplitude and a baseline impedance phase.

14. The wireless power transmitter (100, 600) system of claim 13, wherein the NFC chip (108, 608) compares the baseline vector impedance to the determined vector impedance to determine whether an object is present on the charging surface.

15. The wireless power transmitter (100, 600) system of claim 14, wherein the charging source coil (104) generates a ping signal when the object is determined to be present, wherein the microcontroller (112, 612) receives a ping response from the charge receiving coil in response to the ping signal when a qi-enabled electronic device is on the charging surface.
